# EUROPEAN PATENT APPLICATION

(11) **EP 2 930 305 A1**
(43) Date of publication of application: **14.10.2015**
(21) Application number: 15163433.4
(22) Date of filing: 13.04.2015
(51) Int. Cl.: F01D 5/14

(54) **THICKENED ENDWALL FOR BLOCKIG COMBUSTION GAS INGESTION**

(30) Priority: 11.04.2014 US 201461978491 P
(71) Applicant: United Technologies Corporation, Hartford, CT 06101 (US)
(72) Inventor: Chuong, Conway, Manchester, CT Connecticut 06040 (US); Lienau, Jeffrey J., Wethersfield, CT Connecticut 06109 (US); Yeager, William, Jupiter, FL Florida 33458 (US)
(74) Representative: Hull, James Edward

(57) **Abstract**

An endwall (66) of a gas turbine engine section comprises a flow path surface (100) and a wall (104). The flow path surfaces (100) defines an inner diameter of a main flow path through the gas turbine engine section, and terminates in an aft waterfall step (102). The wall (104) extends substantially radially inward from the waterfall step (102), and defines a blockage feature that impedes airflow from the main flow path to a secondary air cavity (74) situated inward of the waterfall step (102).

## Description

### BACKGROUND

The present invention relates generally to gas turbine engine endwall features, and more specifically to endwall configurations that reduce main gas path flow ingestion into secondary, lower-temperature regions of the gas turbine engine.

Gas turbine engines operate according to a continuous-flow, Brayton cycle. A compressor section pressurizes an ambient air stream, fuel is added and the mixture is burned in a central combustor section. The combustion products expand through a turbine section where bladed rotors convert thermal energy from the combustion products into mechanical energy for rotating one or more centrally mounted shafts. The shafts, in turn, drive the forward compressor section, thus continuing the cycle. Gas turbine engines are compact and powerful power plants, making them suitable for powering aircraft, heavy equipment, ships and electrical power generators. In power generating applications, the combustion products can also drive a separate power turbine attached to an electrical generator.

Seals are required in many locations within a gas turbine engine to regulate air flow to various portions of the engine. One function of air seals in gas turbine engines is to limit ingestion of hot "core" or "main" gas path airflow into secondary cavities and passages. Secondary airflow system components are often constructed to tolerate lower maximum temperatures than core gas path components. Excessive ingestion of main gas path airflow can result in undesirable heating of engine components, reducing part lifetimes or necessitating that parts be constructed of expensive, high temperature-capable materials.

### SUMMARY

The present invention relates to an endwall of a gas turbine engine section. The endwall comprises a flow path surface and a wall. The flow path surface defines the inner diameter of a main flow path through the gas turbine engine section, and terminates in an aft waterfall step. The wall extends substantially radially inward from the waterfall step, and defines a blockage feature that impedes airflow from the main flow path to a secondary air cavity situated inward of the waterfall step.

### BRIEF DESCRIPTION OF THE DRAWINGS

FIG. 1 is a schematic view of a gas turbine engine.
FIG. 2 is a cross-sectional view of a turbine exhaust case region of the gas turbine engine of FIG. 1.
FIG. 3 is a close-up cross-sectional view of an inner diameter vane platform and cavity of the turbine exhaust case region of FIG. 2.
FIG. 4 is a simplified cross-sectional view of the inner diameter vane platform and cavity of FIG. 3, illustrating airflow vectors.
FIG. 5 is a simplified cross-sectional view of the inner diameter vane platform and cavity of FIG. 3, illustrating temperatures.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

A flow blockage feature for a gas turbine engine can be disposed at an aft inner diameter of a turbine exhaust case airflow platform to reduce main airflow ingestion from a main engine gas flow path into a radially inner secondary cavity. The flow blockage feature includes a waterfall step and a substantially radial aft platform wall that together reduce inward airflow between the turbine exhaust case airflow platform and a downstream power turbine airflow platform. The addition of the flow blockage feature reduces the operating temperature of the secondary cavity, allowing lower temperature-capable materials to be used.

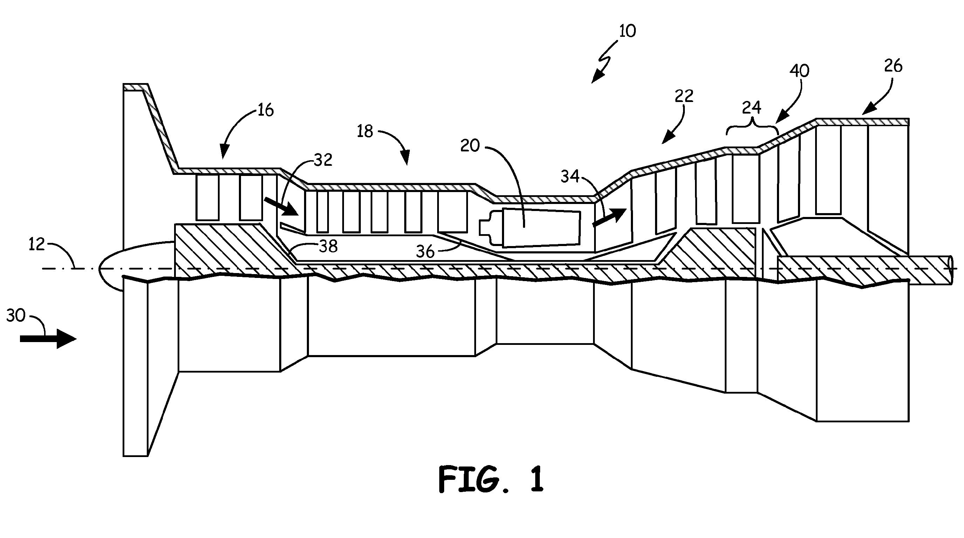

An exemplary gas turbine engine 10 is circumferentially disposed about a central, longitudinal axis or axial engine centerline axis 12 as illustrated in FIG. 1. The engine 10 includes in series order from front to rear, low and high pressure compressor sections 16 and 18, a central combustor section 20 and high and low pressure turbine sections 22 and 24. In some examples, power turbine 26 is disposed aft of low pressure turbine 24. Although illustrated with reference to an industrial gas turbine engine, this application also extends to aero engines with a fan or gear driven fan, and engines with more or fewer sections than illustrated.

As is well known in the art of gas turbines, incoming ambient air 30 becomes pressurized air 32 in the compressors 16 and 18. Fuel mixes with the pressurized air 32 in the combustor section 20, where it is burned to produce combustion gasses 34 that expand as they flow through turbine sections 22, 24 and power turbine 26. Turbine sections 22 and 24 drive high and low pressure rotor shafts 36 and 38 respectively, which rotate in response to the combustion products and thus the attached compressor sections 18, 16. Power turbine 26 can, for example, drive an electrical generator, pump, gearbox, or other accessory (not shown). In the illustrated embodiment, turbine section 24 meets power turbine 26 at joint 40.

It is understood that FIG. 1 provides a basic understanding and overview of the various sections and the basic operation of an industrial gas turbine engine. The illustrated embodiment is provided merely by way of example and not limitation. Numerous alternative configurations are possible, which may include additional components not specifically shorn or omit certain illustrated components. It will become apparent to those skilled in the art that the present application is applicable to all types of gas turbine engines, including those with aerospace applications.

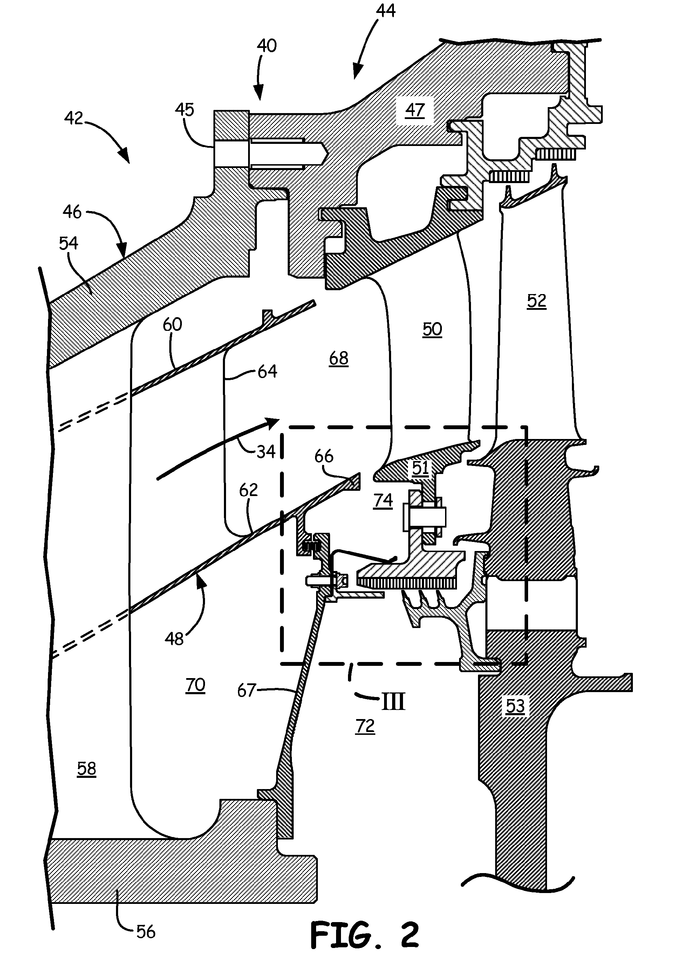

FIG. 2 shows a first module 42 and a second module 44 at joint 40. First module 42 can, for example, be a turbine exhaust case of turbine section 24, and second module 44 can, for example, be a forward portion of power turbine 26. In the illustrated embodiment, first and second modules 42 and 44 are vane sections of gas turbine engine 10. In alternative embodiments, first and second modules 42 and 44 can be other adjacent sections of gas turbine engine 10, including mixed stationary and rotating components. First module 42 and second module 44 are connected at joint 40 by fasteners 45, which can for example be bolts, pins, or screws. First module 42 is only partially illustrated in FIG. 2 and includes a frame 46 and a fairing 48. Second module 44 includes outer radial casing 47, a stator vane 50, vane platform 51, a rotor blade 52, and a rotor disk 53. Frame 46 is a structural support frame including outer frustoconical casing 54, inner circumferential platform 56, and radial struts 58 extending therebetween. Fairing 48 includes outer flow path platform 60, and inner flow path platform 62, and strut liners 64. In the illustrated embodiment, fairing 48 rides frame 46 and surrounds struts 58 to define main engine gas flow path 68 through first module 42. Outer flow path platform 60 and inner flow path platform 62 constitute annular endwalls of main engine flow path 68.

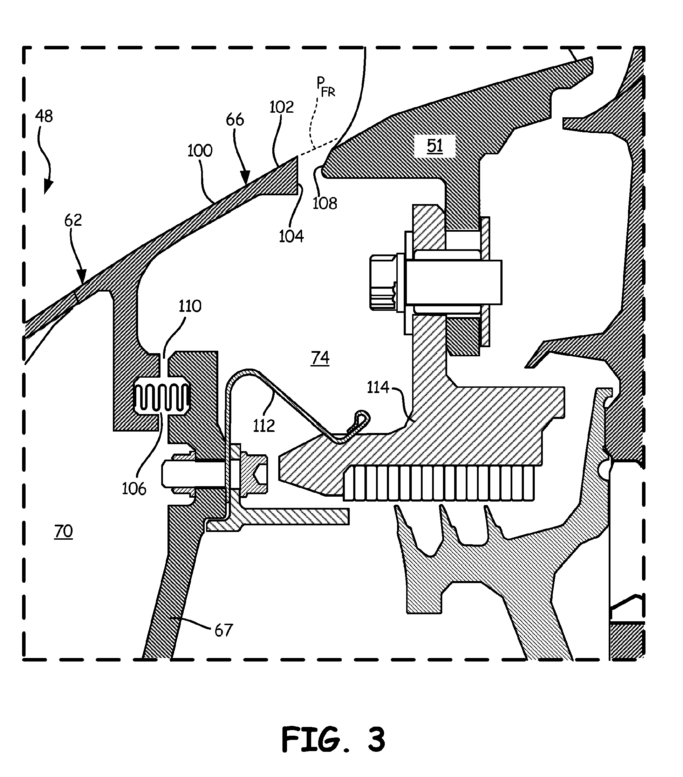

Inner flow path platform 62 terminates at aft inner diameter (ID) platform feature 66, a flow blockage element that impedes ingestion of combustion gasses 34 into secondary air cavity 74. Secondary air cavity 74 is disposed between vane platform 51 of second module 44, and seal support 67 and fairing 48 of first module 42. Secondary air cavity 74 can, for example, receive cooling air from inner plenum 70, an annular space extending from inner circumferential platform 56 to inner flow path platform 62. Aft ID platform feature 66 is described in greater detail below with respect to FIGs. 3-5. Although aft ID platform feature 66 is described with herein as a portion of fairing 48, aft ID platform feature 66 can more generally be an aft portion of any similarly situated endwall.

In the depicted embodiment, hot combustion gasses 34 flow primarily through main engine gas flow path 68. Flow of combustion gasses 34 into secondary air cavity 74, heats secondary air cavity 74. To reduce unwanted main flow gas path ingestion into secondary air cavity 74, and thereby reduce the operating temperature of secondary air cavity 74, inner flow path platform trailing edge is disposed with aft ID feature 66.

FIG. 3 is a close-up cross-sectional view of region III of gas turbine engine 10 from FIG. 2. Included in region III are fairing 48, vane platform 51, inner flow path platform 62, aft ID feature 66, seal support 67, inner plenum 70, and secondary air cavity 74. Aft ID platform feature 66 of inner flow path platform 62 comprises frustoconical surface 100, waterfall step 102, and radial wall 104. Adjacent tip 108 is a forwardmost tip of vane platform 51 immediately downstream of radial wall 104, separated from radial wall 104 by a small gap. Fairing 48 and seal support 67 meet at air seal 106, a partial sealing element that allows leakage air to flow from inner plenum 70 in to secondary air cavity 74 via leakage air inlet 106 and through exit 110. In the illustrated embodiment, secondary air cavity 74 is further defined by finger seal 112 and seal piece 114, although in alternative embodiments secondary air cavity 74 can be bounded and defined by other components.

Vane platform 51 and inner flow path platform 62 can be constructed of high temperature-capable materials such as nickel or cobalt-based superalloys, so as to withstand the high temperatures of combustion gasses 34 passing through main engine gas flow path 68 (see FIG. 2, discussed above). Other elements surrounding secondary air cavity 74 can be formed of less expensive, lower temperature-capable materials. Leakage air from leakage air inlet 110 serves to reduce the overall temperature within secondary air cavity 74, and aft ID platform feature 66 reduces ingestion of hot combustion gasses 34 between inner flow path platform 62 and vane platform 51, thereby obviating the need to use very high temperature-capable materials in components surrounding secondary air cavity 74.

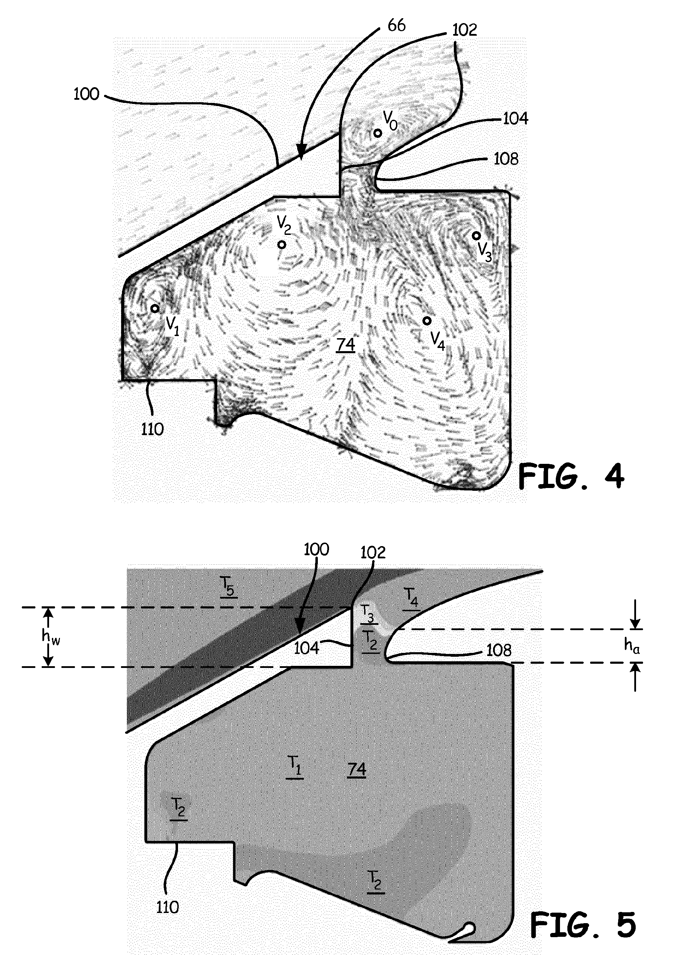

Aft ID platform feature 66 comprises frustoconical surface 100, waterfall step 102, and radial wall 104. Frustoconical surface 100 extends to a maximum radius greater than the radius of vane platform 51 at adjacent tip 108, terminating in waterfall step 102 (see FIG. 5). Waterfall step 102 thus discourages flow between radial wall 104 and adjacent tip 108 by introducing a radial drop from waterfall step 102 to adjacent tip 108. Projection line P_{FR} illustrates the slope of frustoconical surface 100 relative to adjacent tip 108. Substantially laminar flow along frustoconical surface 100 tends to continue projection line P_{FR}, guided by waterfall step 102. Projection line P_{FR} extends radially outboard of adjacent tip 108 of vane platform 51. Consequently, airflow through main engine gas flow path 68 tends to pass from frustoconical surface 100 to vane platform 51, effectively "jumping" the gap therebetween.

Radial wall 104 extends radially inward from waterfall step 102 into secondary air cavity 74, and is formed of additional material thickening inner flow path platform 62 at its aft-most extent. Radial wall 104 impedes forward flow of ingested combustion gasses 34 from main engine gas flow path 68, thereby reducing vortexing within secondary air cavity 74, and further decreasing ingestion and corresponding heating of secondary air cavity 74. In the illustrated embodiment, inner flow path platform 62 is of substantially uniform thickness except at aft ID platform feature 66, where frustoconical surface 100 and radial step 104 together define a substantially triangular cross-section to aft ID platform feature 66. In one embodiment, radial wall 104 is formed via the triangular cross-section widening of inner flow path platform 62 at aft ID platform feature 66. This triangular cross-section can, for example, be substantially a right triangle, as shown in FIG. 3. More particularly, aft ID platform 66 comprises additional material extending radially inward from the otherwise substantially flat surface of inner flow path platform 62 into secondary air cavity 74 and terminating in radial wall 104.

FIG. 4 is a simplified cross-sectional view of the region III (shown and described in greater detail with respect to FIG. 3, above), with airflow direction vectors illustrating air flow patterns in one embodiment of secondary air cavity 74. The airflow patterns shown in FIG. 4 are intended for illustrative purposes only; aft ID platform feature 66 can produce a wide range of airflow patterns without departing from the spirit and scope of the present invention.

In the illustrated embodiment, frustoconical surface 100, waterfall step 102, and radial wall 104 of aft ID platform feature 66 together produce airflow patterns with low intensity vortices V₁, V₂, V₃, and V₄. Although four vortices are shown in FIG. 4, some embodiments of the present invention can produce more or fewer vortices within secondary air cavity 74. Generally, however, the airflow patterns produced by platform feature 66 have several significant features. First, vortex airflow within secondary air cavity 74 is characterized by low speed relative to the flow of combustion gas 34 through main engine gas flow path 68. Second, waterfall step 102 causes nearly laminar flow along frustoconical surface 100 to predominantly continue to flow downstream, "jumping" frustoconical surface 100 to vane platform 51 rather than turning radially inward towards secondary air cavity (see projection line P_{FR}, FIG. 3). Third, radial wall 104 blocks upstream airflow about vortex V₀, further reducing ingestion of this airflow. Aft ID platform feature 66 can, for example, reduce ingestion of combustion gasses 34 from main engine gas flow path 68 by approximately 40% relative to an uncontoured inner flow path platform lacking aft ID platform feature 66. The resulting airflow within secondary air cavity 74 is turbulent but cool relative to combustion gasses 34. In some embodiments, air from leakage air inlet 106 passes through leakage air exit 110 and further cools secondary air cavity 74.

FIG. 5 is a simplified cross-sectional view of the region III (shown and described in greater detail with respect to FIG. 3, above), with isothermal lines showing temperature regions. FIG. 5 depicts only an illustrative example of temperature distributions in and around secondary air cavity 74; actual temperature distributions can vary across embodiments of the present invention and as a function of operating conditions. In the illustrated embodiment, region III has temperature zones labeled (in order of increasing temperature) T₁, T₂, T₃, T₄, and T₅. Aft ID platform feature 66 increases the temperature differential between combustion gasses 34 flowing through main engine gas flow path 68 (e.g. region T₅) and the secondary air cavity 74 (predominantly region T₁) by reducing ingestion of combustion gasses 34 into secondary air cavity 74. As illustrated in FIG. 5, aft ID platform feature 66 comprises frustoconical surface 100, waterfall step 102, and radial wall 104. Frustoconical surface 100 terminates at waterfall step 102, where aft ID platform feature 66 turns inward in radial wall 104. Radial wall 104 has wall height h_{w} greater than an adjacent height hₐ of adjacent tip 108. Moreover, radial wall 104 extends radially both outward and inward of adjacent tip 108. Radial wall 104 thus impedes ingestion of combustion gasses 34 by interrupting backflow of gasses along adjacent tip 108 towards secondary air cavity 74. Main (core) laminar air flow axially downstream along frustoconical surface 100 predominantly "jumps" from aft ID platform feature 66 to vane platform 51, due to waterfall step 102. Although some such gasses backflow (see vortex V₀, FIG. 4), radial wall 104 redirects the bulk of such backflowing gasses back into main engine gas flow path 68, producing a sharp temperature gradient between main engine gas flow path 68 and secondary air cavity 74. Aft ID platform feature 66 can, for example, reduce air temperatures in secondary air cavity 74 by 50°F, 75°F, or more, reducing the maximum operating temperatures of surrounding components. By lowering the operating temperatures of components around inner air cavity 74, aft ID platform feature 66 extends part lifetimes, and allows components to be formed of less expensive, lower temperature-capable materials.

### Discussion of Possible Embodiments

The following are non-exclusive descriptions of possible embodiments of the present invention.

An endwall of a gas turbine engine section, the endwall comprising: a flow path surface defining an inner diameter of a main flow path through the gas turbine engine section, and terminating in an aft waterfall step; and a wall extending substantially radially inward from the waterfall step, and defining a blockage feature that impedes airflow from the main flow path to a secondary air cavity situated inward of the waterfall step.

The endwall of the preceding paragraph can optionally include, additionally and/or alternatively, any one or more of the following features, configurations and/or additional components:

A further embodiment of the foregoing endwall wherein the wall is formed via a triangular cross-section widening of a region of the endwall near the waterfall step.

A further embodiment of the foregoing endwall wherein the triangular cross-section widening comprises a substantially triangular cross-section portion of additional material extending from an endwall into the secondary air cavity.

A further embodiment of the foregoing endwall wherein the substantially triangular cross-section portion has a substantially right triangle cross-section.

A further embodiment of the foregoing endwall wherein the substantially radial wall is radially thicker than an adjacent forward region of a second gas turbine engine section immediately downstream of the gas turbine engine section.

A further embodiment of the foregoing endwall wherein the gas turbine section includes a cooling air inlet into the secondary air cavity.

A further embodiment of the foregoing endwall wherein the gas turbine engine section is a vane section.

A further embodiment of the foregoing endwall wherein the flow path surface is substantially frustoconical, such that the flow path defined by the flow path surface extends radially outward as it extends axially aft

A gas turbine engine comprising: a first gas turbine section with a first platform defining an inner diameter of a main gas turbine flow path in a first region; a second gas turbine section situated immediately aft of the first gas turbine section, and having a second platform defining an inner diameter of the main gas turbine flow path in a second region; and an annular secondary air cavity situated at an aft inner diameter of the first platform, between the first and second gas turbine sections; an ingestion reduction feature disposed to reduce airflow from the main gas turbine flow path to the annular secondary air cavity, the ingestion reduction feature comprising: a waterfall step at an aft end of the first platform higher than an adjacent forward end of the second platform; and a wall extending substantially radially inward from the waterfall step, into the annular secondary air cavity.

The gas turbine engine of the preceding paragraph can optionally include, additionally and/or alternatively, any one or more of the following features, configurations and/or additional components:

A further embodiment of the foregoing gas turbine engine, wherein the wall has radial wall thickness greater than a radial thickness of an adjacent forward tip of the second endwall.

A further embodiment of the foregoing gas turbine engine, wherein the wall extends from an outer radial extent radially outward from an outer radial extent of the adjacent forward tip, to an inner radial extent radially inward from an inner radial extent of the adjacent forward tip.

A further embodiment of the foregoing gas turbine engine, wherein the first turbine section is a turbine exhaust case, and the second turbine section is a power turbine.

A further embodiment of the foregoing gas turbine engine, wherein the first platform and the second platform are both stationary endwalls.

A further embodiment of the foregoing gas turbine engine, further comprising a cooling air inlet into the annular secondary air cavity.

A further embodiment of the foregoing gas turbine engine, wherein the wall is formed via a triangular cross-section widening of the first platform at the aft end of the first platform.

A method for reducing combustion gas ingestion into a secondary air cavity of a gas turbine engine, the method comprising: directing substantially laminar flow along a frustoconical flow path surface terminating in a waterfall step disposed radially outward of an adjacent tip of a downstream vane platform, such that the combustion predominantly jumps from the frustoconical flow path surface to the downstream vane platform without being ingested therebetween; and impeding radially inward backflow between the waterfall step and the downstream vane platform via a radial wall extending radially inward from the waterfall step, and into the secondary air cavity.

The method of the preceding paragraph can optionally include, additionally and/or alternatively, any one or more of the following features, configurations and/or additional components:

A further embodiment of the foregoing method, wherein the radial wall extends from a radial location radially outward of an outer radial extent of the adjacent tip, to a radial location radially inward of an inner radial extent of the adjacent tip.

A further embodiment of the foregoing method, wherein a downstream projection of the frustoconical surface extends radially outboard of an adjacent tip.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An endwall (66) of a gas turbine engine section (42), the endwall (66) comprising:
a flow path surface (100) defining an inner diameter of a main flow path (34) through the gas turbine engine section (42), and terminating in an aft waterfall step (102); and
a wall (104) extending substantially radially inward from the waterfall step (102), and defining a blockage feature that impedes airflow from the main flow path (34) to a secondary air cavity (74) situated inward of the waterfall step (102).

2. The endwall of claim 1, wherein the wall (104) is formed via a triangular cross-section widening of a region of the endwall (66) near the waterfall step (102).

3. The endwall of claim 2, wherein the triangular cross-section widening comprises a substantially triangular cross-section portion of additional material extending from an endwall (66) into the secondary air cavity (74), optionally, wherein the substantially triangular cross-section portion has a substantially right triangle cross-section.

4. The endwall of any preceding claim, wherein the substantially radial wall (104) is radially thicker than an adjacent forward region (108) of a second gas turbine engine section (44) immediately downstream of the gas turbine engine section (42).

5. The endwall of any preceding claim, wherein the gas turbine section includes a cooling air inlet (110) into the secondary air cavity (74).

6. The endwall of any preceding claim, wherein the gas turbine engine section (42) is a vane section.

7. The endwall of any preceding claim, wherein the flow path surface (100) is substantially frustoconical, such that the flow path (34) defined by the flow path surface extends radially outward as it extends axially aft.

8. A gas turbine engine comprising:
a first gas turbine section (42) with a first platform (62) defining an inner diameter of a main gas turbine flow path (34) in a first region;
a second gas turbine section (44) situated immediately aft of the first gas turbine section (42), and having a second platform (51) defining an inner diameter of the main gas turbine flow path (34) in a second region; and
an annular secondary air cavity (74) situated at an aft inner diameter of the first platform (62), between the first and second gas turbine sections (42, 44);
an ingestion reduction feature (66) disposed to reduce airflow from the main gas turbine flow path (34) to the annular secondary air cavity (74), the ingestion reduction feature (66) comprising:
a waterfall step (102) at an aft end of the first platform (62) higher than an adjacent forward end (108) of the second platform (51); and
a wall (104) extending substantially radially inward from the waterfall step (102), into the annular secondary air cavity (74).

9. The gas turbine engine of claim 8, wherein the wall (104) has radial wall thickness greater than a radial thickness of an adjacent forward tip (108) of the second platform, wherein, optionally, the wall (104) extends from an outer radial extent radially outward from an outer radial extent of the adjacent forward tip (108), to an inner radial extent radially inward from an inner radial extent of the adjacent forward tip (108).

10. The gas turbine engine of claim 8 or 9, wherein the first turbine section (42) is a turbine exhaust case, and the second turbine section (44) is a power turbine.

11. The gas turbine engine of claim 8, 9 or 10, wherein the first platform (62) and the second platform (51) are both stationary endwalls.

12. The gas turbine engine of any of claims 8 to 11, further comprising a cooling air inlet (110) into the annular secondary air cavity (74).

13. The gas turbine engine of any of claims 8 to 12, wherein the wall (104) is formed via a triangular cross-section widening of the first platform (62) at the aft end of the first platform (62).

14. A method for reducing combustion gas ingestion into a secondary air cavity (74) of a gas turbine engine (10), the method comprising:
directing substantially laminar flow along a frustoconical flow path surface (100) terminating in a waterfall step (102) disposed radially outward of an adjacent tip (108) of a downstream vane platform (51), such that the combustion predominantly jumps from the frustoconical flow path surface (100) to the downstream vane platform (51) without being ingested therebetween; and
impeding radially inward backflow between the waterfall step (102) and the downstream vane platform (51) via a radial wall (104) extending radially inward from the waterfall step (102), and into the secondary air cavity (74).

15. The method of claim 14, wherein the radial wall (104) extends from a radial location radially outward of an outer radial extent of the adjacent tip (108), to a radial location radially inward of an inner radial extent of the adjacent tip (108), and wherein, optionally, a downstream projection of the frustoconical surface (100) extends radially outboard of an adjacent tip (108).
